# EUROPÄISCHE PATENTSCHRIFT

(11) **EP 0 972 157 B1**
(45) Veröffentlichungstag und Bekanntmachung des Hinweises auf die Patenterteilung: **25.06.2003**
(21) Anmeldenummer: 98963338.3
(22) Anmeldetag: 11.11.1998
(51) Int. Cl.: F21V 7/00

(54) **VERFAHREN ZUM AUSTRAGEN VON MATERIAL AUS EINER DRUCKKAMMER UND FÖRDEREINRICHTUNG**
METHOD FOR REMOVING MATERIAL FROM A PRESSURE CHAMBER AND CONVEYOR DEVICE
PROCEDE PERMETTANT D'EXTRAIRE UN MATERIAU SITUE DANS UNE CHAMBRE DE PRESSION ET DISPOSITIF D'EXTRACTION APPROPRIE

(30) Priorität: 28.11.1997 DE 19752718
(43) Veröffentlichungstag der Anmeldung: 19.01.2000
(73) Patentinhaber: Wayss & Freytag Ingenieurbau AG, 60489 Frankfurt am Main (DE)
(72) Erfinder: PUNTKE, Wolfgang, D-65933 Frankfurt am Main (DE)
(74) Vertreter: Boecker, Joachim, Dr.-Ing.
(86) Internationale Anmeldenummer: DE9803289
(87) Internationale Veröffentlichungsnummer: WO99028671

(56) Entgegenhaltungen:
- DE-A- 3 317 166
- DE-A- 3 428 431
- DE-A- 3 622 267
- DE-A- 4 206 831
- FR-A- 2 679 959
- GB-A- 1 570 329
- PATENT ABSTRACTS OF JAPAN vol. 013, no. 485 (M-887), 6. November 1989 & JP 01 192997 A (AOKI CORP), 3. August 1989
- PATENT ABSTRACTS OF JAPAN vol. 016, no. 531 (M-1333), 30. Oktober 1992 & JP 04 198592 A (UBE IND LTD), 17. Juli 1992
- PATENT ABSTRACTS OF JAPAN vol. 098, no. 014, 31. Dezember 1998 & JP 10 252390 A (TAISEI CORP;NKK CORP), 22. September 1998

## Beschreibung

Die Erfindung betrifft ein Verfahren zum Austragen von Material aus einer Druckkammer, wie es gattungsmäßig im Anspruch 1 beschrieben ist, sowie eine Fördervorrichtung zur Durchführung des Verfahrens.

Aus dem Tunnelbau ist - z.B. bei Hydroschilden - bekannt, vor Ort in der Abbaukammer abgebautes Haufwerk in Rohrleitungen, mit Hilfe der die Ortsbrust stützenden Flüssigkeit aus der Abbaukammer auszutragen und durch Pumpen abzufördern. Dieses Verfahren hat den Nachteil, daß mit dem Haufwerk große Flüssigkeitsmengen transportiert und wieder vom Haufwerk separiert werden müssen. Die Stützflüssigkeit wird wiedergewonnen. Dazu sind große Separieranlagen notwendig. Der die Separation verlassende Boden hat noch einen hohen Gehalt an Stützflüssigkeit und ist kurzfristig nicht bodenmechanisch verarbeitbar. Er verursacht weitere Kosten für den Abtransport und die Deponierung. Die Entsorgung des abgebauten Haufwerks mit der Stützflüssigkeit bei Schilden mit Stützung der Ortsbrust durch eine Flüssigkeit ist daher sehr aufwendig.

Bei EPB (Earth Pressure Balanced)- Schilden wird ein von Natur hinreichend undurchlässiger, durch geeignete Mittel, z.B. Schäume konditionierter abgebauter Boden zur Stützung der Ortsbrust benutzt. Dieser Boden wurde bisher mit Schneckenförderer aus der Abbaukammer abgefördert. Die im Färderer beim Fördervorgang verdichtete Erdsäule wirkt druckhaltend für den Druck in der Abbaukammer und als Schleuse zum rückwärtigen drucklosen Schildraum. Je größer die Durchlässigkeit des Bodens ist, desto größer muß die Länge der dichtenden Erdsäule und entsprechend der Schnecke des Förderers sein. Die Wirkung des Erdpfropfens als Druckverschluß der Abbaukammer hat seine Grenze bei Böden mit einem k-Wert größer als 10⁻⁵ m/s und bei Stülzdrücken etwa über 2 bar.

Böden mit zu großer Durchlässigkeit können im Erdpfropfen den Porendruck nicht mehr halten, so daß eine der Förderschnecke nachgeschaltete Materialschleuse erforderlich ist. Diese Materialschleusen sind im weitesten Sinn Pumpen wie Kolben-, Schlauch- und Kreiselpumpen sowie schubladenartige und rotierende Kammerschleusen. Sie haben rotierende und bewegte Teile, die hohem Verschleiß unterliegen. Sie erfordern in der Regel eine systembedingte Konditionierung des auszutragenden Haufwerks, die dem Ziel, einen möglichst trockenen Austrag zu erreichen, entgegensteht. Ihre Austragsleistung ist, bezogen auf die Förderleistung des Schildes gering. Zur Erhöhung der Austragsleistung sind großvolumige Konstruktionen erforderlich, die nur bei großen Tunnel-Querschnitten im Schildraum untergebracht werden können. Der Schild kann daher in seiner Leistung nicht ausgefahren werden. Derartige Austragsvorrichtungen setzen daher die Wirtschaftlichkeit einer Vortriebsmaschine erheblich herab.

Aus der DE OS 36 272 70 ist ein EPB-Schild bekannt mit Abförderung des gelösten Bodens aus der Abbaukammer mit einem Schneckenförderer. Die Förderschnecke drückt den gewonnenen Boden aus der Druckkammer zu der im Schildinnenraum gelegenen verschließbaren Schieberöffnung, aus der der Boden auf das darunter im atmosphärischen Druckbereich liegende Förderband ausgetragen wird. Eine derartige Förderanlage kann, wie oben dargelegt, bei durchlässigen Boden den höheren Druck der Abbaukammer nicht halten. Bei durchlässigen Böden muß der Schieber geschlossen und die Bodenförderung eingestellt werden.

Der Erfindung liegt die Aufgabe zugrunde, ein Verfahren und eine Vorrichtung zum Austragen von Material aus einer Abbaukammer der gattungsgemäßen Arten anzugeben, mit denen auch der Abtransport von Böden mit einer Durchlässigkeit k > 10⁻⁵ m/s auf einfache, verschleißarme, raumsparende und zuverlässige Weise möglich ist.

Die Aufgabe wird gelöst durch ein Verfahren, wie es im kennzeichnenden Merkmal des Anspruchs 1 und eine Fördervorrichtung wie sie im kennzeichnenden Merkmal des Anspruchs 5 beschrieben sind.

Durch das Verfahren nach Anspruch 1 wird auf überraschend einfache Weise das Arbeitsvermögen, das ein komprimiertes Medium - Gas, Gasgemisch, Schaum oder geschäumte Suspension - in den Poren eines Haufwerks im Moment der Entspannung aufweist, zum Austragen des Haufwerks aus einer Abbaukammer genutzt. Es ist vornehmlich für den Tunnelbau entwickelt. Dasselbe Verfahren könnte in analoger Weise in anderen Industrien, bei denen haufwerksartige Stoffe aus Druckbehältern ausgetragen werden sollen, - beispielsweise in der Grundstoffindustrie, der chemischen Industrie, der Müllverwertung und Abfallentsorgung - Anwendung finden.

Das erfindungsgemäße Verfahren ist grundsätzlich von einer der Förderkammer vorgeschalteten Fördereinrichtung wie einer Pumpe oder einer Förderschnecke unabhängig. Die Förderkammer ist eine einfache, nur der Bildung eines abschließbaren Raumes dienende Zelle, die keinerlei rotierende Elemente oder mechanische Antriebe aufweist. Sie ist daher sehr unempfindlich im Betrieb. Sie hat geringen Raumbedarf und ist einfach im Schildraum unterzubringen.

Die Füll- und Entleerzeiten sind kurz, so daß eine schnelle Taktfolge und ein großer Durchsatz erreichbar sind, Mit der erfindungsgemäßen Fördervorrichtung kann daher dem Förderanspruch aus dem Schildvortrieb am ehesten entsprochen werden.

Das auszutragende Material kann sehr wasserarm konditioniert werden, so daß gute Voraussetzungen für eine wirtschaftliche Abförderung und einfachen Wiedereinbau gegeben sind.

Im Tunnelbau müssen oft wechselnde Lagen unterschiedlicher Bodenarten aufgefahren werden, die nicht homogen gemischt oder konditioniert werden können. Müssen inhomogene Gemische aus haufwerksporenarmen, weitgehend wasserundurchlässigen Böden und stark gas- und wasserdurchlässigen Böden druckhaltend ausgetragen werden, so kann der Fall eintreten, daß im Wechsel der Bodenarten beim Abbau Zustände entstehen, bei denen das auszutragende Haufwerk eine so geringe Porosität aufweist, daß die darin gespeicherte Entspannungsenergie nicht ausreicht, um einen vollständigen Austrag hinreichend schnell zu erzielen. Diese Tendenz wird durch mäßiges Druckgefälle verstärkt.

Um das vorgeschlagene Verfahren auch unter diesen Bedingungen zuverlässig nutzen zu können, wird alternativ im Einlaßbereich der Förderkammer ein Gasdruckspeicher angeordnet, der im Bedarfsfall zusätzlich erforderliche Entspannungsenergie bereithält und zugeschaltet werden kann, wenn inhomogene Bodengemische unterschiedlicher Kohäsion oder Böden mit geringer Entspannungsenergie ausgetragen werden müssen.

Die Erfindung wird anhand der Figuren 1 - 3 erläutert. Es zeigen:
- Fig. 1A - E: Schematische Darstellung der Ablaufstadien des erfindungsgemäßen Verfahrens
- Fig. 2A - E: Schematische Darstellung des erfindungsgemäßen Verfahrens nach Fig. 1A - E, ergänzt mit einem Gasdruckspeicher
- Fig. 3: Beispiel der Anwendung einer erfindungsgemäßen Förderkammer in einem EPB-Schild.

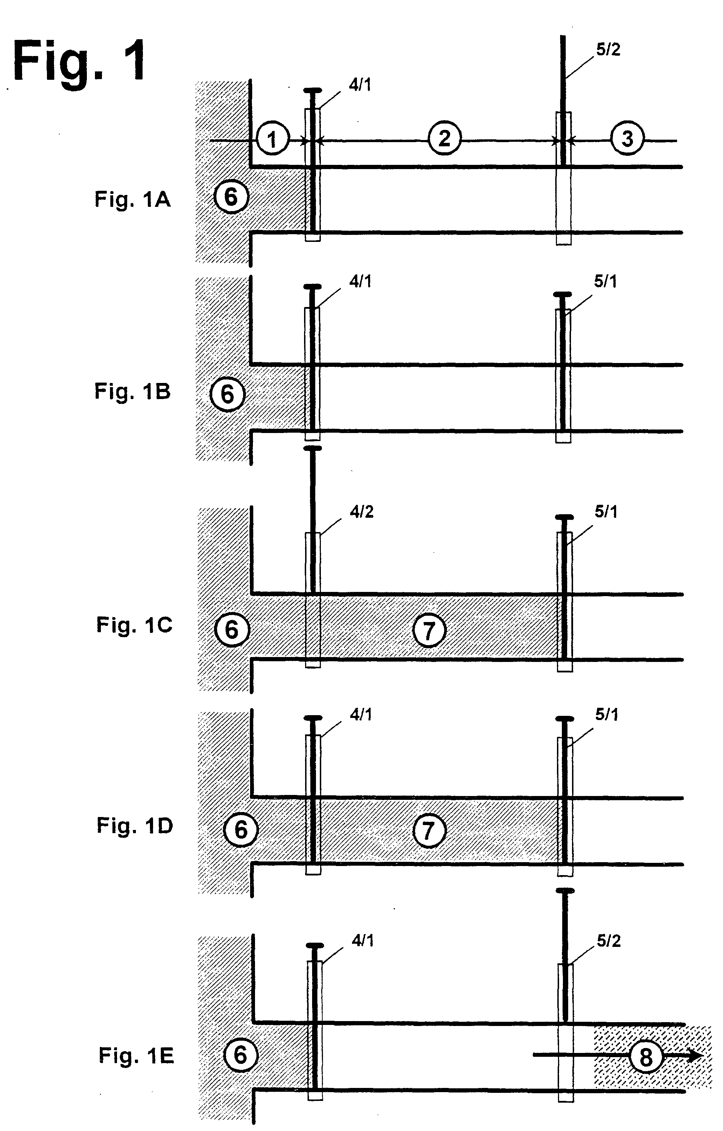

Fig. 1A - E zeigen die Arbeitsweise der erfindungsgemäßen Förderkammer 2. Sie ist zwischen einer Druckkammer 1, bei der es sich um eine Abbaukammer der eingangs beschriebenen Art handeln kann, mit hohem Druck und einem Austragelement 3 im Bereich niedrigeren Drucks angeordnet. Sie ist gegen die Druckkammer 1 durch den Schieber 4 und gegen das Austrageelement 3 durch den Schieber 5 verschließbar.

In der Druckkammer 1 befindet sich das aus der Kammer auszutragende unter Druck stehende Material 6 bis an den in Phase Fig. 1A in geschlossenem Zustand 4/1 stehenden Schieber 4. Der Schieber 5 ist noch im geöffneten Zustand 5/2 nach der vorausgegangenen Entleerung der Förderkammer 2. In Phase Fig. 1B wird der Schieber 5 in die Stellung 5/1 geschlossen. In der leeren Förderkammer 2 herrscht Niederdruck. Darauf wird in Phase Fig. 1C der Schieber 4 in die Stellung 4/2 geöffnet. Der Überdruck im Druckraum 1 drückt das Material 6 in die leere Förderkammer 2. In Phase Fig. 1D wird der Schieber 4 in Stellung 4/1 geschlossen. In der Förderkammer 2 befindet sich eine abgetrennte, unter Porenüberdruck stehende Materialmenge 7. In Phase Fig. 1E wird der Schieber 5 schlagartig in Stellung 5/2 geöffnet.

Der Porenüberdruck in der Materialmenge 7 gegenüber dem unter niedrigem Druck stehenden Austrageelement 3 (hinterer Raum) drückt die Materialmenge 7 aus der Förderkammer 2 heraus und das entspannte Material 8 tritt im Bereich niedrigen Drucks aus. Damit ist der Zustand der Phase Fig. 1A wieder erreicht und ein neuer Austragtakt kann beginnen.

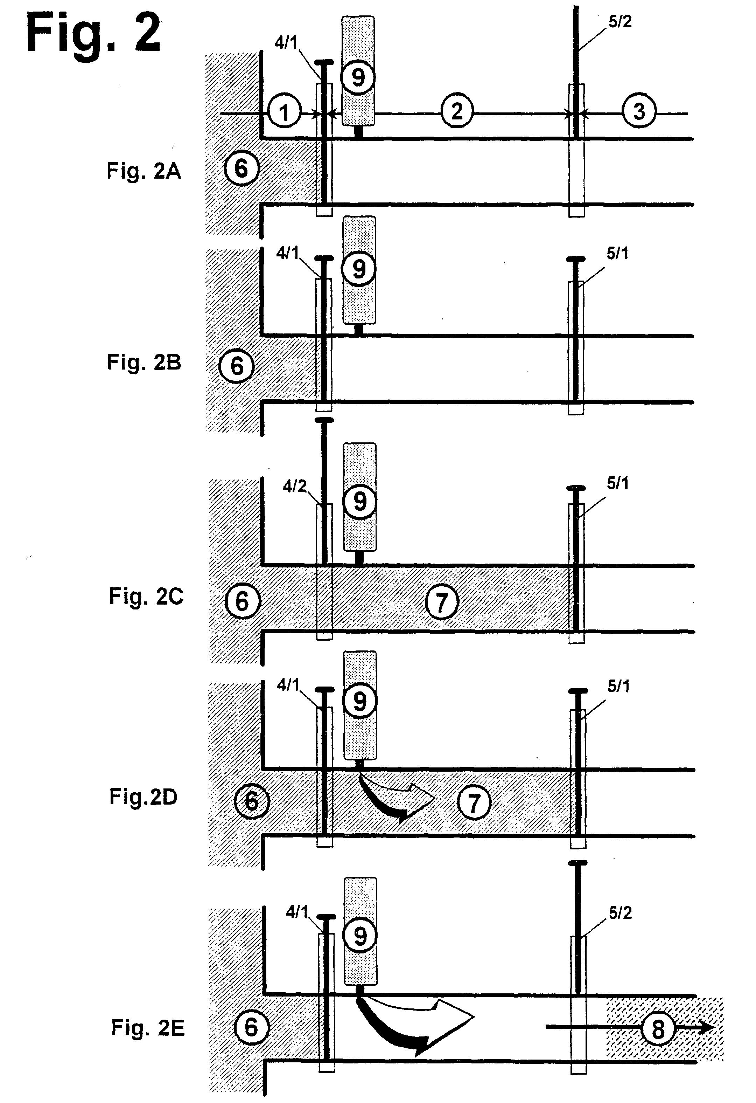

In Fig. 2 ist die Förderkammer 2 im Einlaßbereich mit einem Gasdruckspeicher 9 versehen. Die Abläufe der Phasen Fig. 2A bis 2C entsprechen denen von Fig. 1A bis 1C. In Phase Fig. 2D wird der Schieber 4 in Stellung 4/1 geschlossen. In der Förderkammer 2 befindet sich eine abgetrennte, unter Porenüberdruck stehende Materialmenge 7. Der Gasdruckspeicher 9 ist mit einem Druck geladen, der höher ist als der Porenüberdruck. Durch Öffnen des Verbindungsventils zwischen Speicher 9 und Förderkammer 2 wird der Porenüberdruck in der geschlossenen Förderkammer 2 erhöht. In Phase Fig. 2E wird der Schieber 5 schlagartig in Stellung 5/2 geöffnet. Gleichzeitig mit oder unmittelbar nach der Öffnung des Schiebers 5 gibt der Gasdruckspeicher 9 nochmals einen Gasdruckstoß in den Einlaßbereich der Förderkammer 2 ab. Der Expansionsdruck des Gasdruckstoßes und der erhöhte Porenüberdruck in dem Material 7 gegenüber dem Austrageelement 3 drücken die Materialmenge 7 aus der Förderkammer 2 heraus und das entspannte Material 8 tritt im Bereich niedrigen Drucks aus. Damit ist der Zustand der Phase Fig. 2A wieder erreicht und ein neuer Austragstakt kann beginnen.

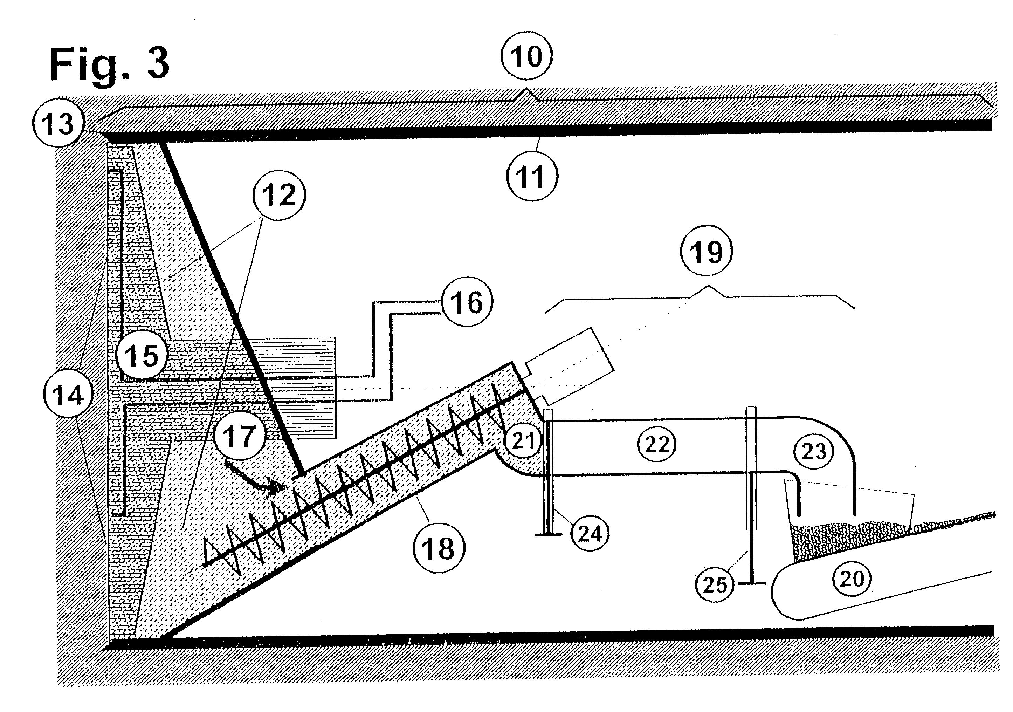

Fig. 3 zeigt ein Anwendungsbeispiel für eine erfindungsgemäße Fördervorrichtung in einer EPB-Schildvortriebsmaschine 10. Die vorn im Schild 11 angeordnete unter Druck stehende Abbaukammer 12 wird rückwärtig durch die. trichterförmige Rückwand der Abbaukammer abgeschlossen, die mit der Schneide 13 gegen die Ortsbrust 14 drückt und so die Abbaukammer nach vorn abschließt. Ein Schneidrad 15 baut den Boden an der Ortsbrust ab, der durch den Schildvortrieb und durch den Druck des durch Leitungen 16 an die Ortsbrust 14 und in die Abbaukammer 12 eingepreßten und durch die Drehbewegung des Schneidrades in das abgebaute Haufwerk eingemischten Schaumes in der Abbaukammer die Ortsbrust stützt.

Das Haufwerk 17 wird in die Förderschnecke 18 eingedrückt, die zweckmäßig zur Erreichung eines gleichmäßigen Zulaufes zur erfindungsgemäßen Fördervorrichtung 19 zwischen Abbaukammer 12 und Fördervorrichtung 19 eingebaut sein kann. Die Fördervorrichtung 19 entleert auf ein Förderband 20. Sie besteht aus einem im wesentlichen unter dem Druck in der Abbaukammer 12 stehenden Zulaufteil 21, der Förderkammer 22 und einem Austragselement 23. Zwischen dem Zulaufteil 21 und der Förderkammer ist der Schieber 24, zwischen der Förderkammer und dem Austragelement 23 der Schieber 25 angeordnet. Zum Austrag des Haufwerks aus der Abbaukammer 12 laufen in der Fördervorrichtung 19 die schematisch in Figur 1 oder 2 beschriebenen Vorgänge ab.

## Patentansprüche

1. Verfahren zum Austragen von Material (6,17) aus einer Druckkammer (1,12), vornehmlich von Haufwerk aus der Abbaukammer (12) von Erddruckschilden, in der das Material mit einem kompressiblen gasförmigen Medium vermischt gespeichert wird und aus der das mit dem kompressiblen gasförmigen Medium durchmischte, unter Druck stehende Material (6,17) durch die geöffnete Öffnung eines Schiebers (4,24) ausgepreßt wird durch die Kraft des Druckes in der Druckkammer (1,12), welcher Druck größer ist als ein kleinerer, vorzugsweise atmosphärischer Druck, welcher in einem Raum außerhalb der Druckkammer, dem sogenannten.hinteren Raum, herrscht, **dadurch gekennzeichnet, daß** das Material durch den geöffneten Eingangsschieber (4,24) in eine Förderkammer (2,22) gedrückt wird, welche von dem Eingangsschieber (4,24) und von einem gegenüber dem unter niedrigerem Druck stehenden hinteren Raum (3,23) geschlossenen Ausgangsschieber (5,25) begrenzt wird, und daß der Auswurf des Materials aus der Förderkammer (2,22) nach Schließen des Eingangsschiebers (4,24) durch plötzliches öffnen des Ausgangsschiebers (5,25) aufgrund der plötzlichen Entspannung des komprimierten gasförmigen Mediums erfolgt.

2. Verfahren nach Anspruch 1, **dadurch gekennzeichnet, daß** das genannte Material (6,17) mit dem genannten kompressiblen gasförmige Medium über eine Fördereinrichtung, wie einen Schneckenförderer (18), der Förderkammer (22) zugeführt wird, welde Fördereinrichtung (18), zugleich als Druckschleuse wirkt und die mit ihrer Eingangsseite an die genannte Druckkammer (12) und mit ihrer Ausgangsseite an den genannten Eingangsschieber (4,24) der Förderkammer (22) angeschlossen ist.

3. Verfahren nach Anspruch 1 oder 2, **dadurch gekennzeichnet, daß** die Austragenergie in der Förderkammer (2,22) erhöht wird durch in die mit Material (7) beaufschlagte, geschlossene Förderkammer zusätzlich eingeleitetes Gas, das unter einem Druck steht, der größer ist als der Porendruck des Materials (7) in der Förderkammer (2,22).

4. Verfahren nach einem der Ansprüche 1 bis 3, **dadurch gekennzeichnet, daß** das Material (6,17) durch die Zugabe von Mitteln, wie zum Beispiel Schäumungsmitteln, so aufbereitet wird, daß das kompressible gasförmige Medium sich verzögert gegenüber der Öffnungszeit des Ausgangsschiebers (5,25) entspannt.

5. Fördervorrichtung zum Austragen von Material (6,17) aus einer Druckkammer (1,12), vornehmlich zum Austrag von Haufwerk aus der Abbaukammer (12) von Erddruckschilden, mit der das Material durch einen in der Druckkammer (1,12) herrschenden Druck, der höher ist als ein kleinerer, vorzugsweise atmosphärischer Druck, welcher in einem Raum (3,23) außerhalb der Druckkammer, dem sogenannten hinteren Raum, herrscht, durch eine geöffnete Schieberöffnung (4,24) ausgepreßbar ist, zur Durchführung des Verfahrens nach einem der Ansprüche 1 bis 4, **dadurch gekennzeichnet, daß** im Austragsweg zwischen der Druckkammer (1,12) und dem genannten hinteren Raum (3,23) eine leere rohrförmige Förderkammer (2,22) mit glatter Wandung vorgesehen ist, die durch einen Eingangsschieber (4,24) zur Druckkammer (1,22) und durch einen schnell öffenbaren Ausgangsschieber (5,25) zum hinteren Raum (3,23) begrenzt ist, und daß die Schieber (4,5/24,25) so steuerbar sind, daß der eine Schieber erst öffenbar ist, wenn der andere geschlossen ist.

6. Fördervorrichtung nach Anspruch 5, **dadurch gekennzeichnet, daß** das genannte Material (6,17) mit dem genannten kompressiblen gasförmigen Medium über einen Förderer, wie einen Schneckenförderer (18), der Förderkammer (22) zugeführt wird, welder Förderer 18) mit seiner Eingangsseite an die genannte Druckkammer (12) und mit seiner Ausgangsseite an den Eingangsschieber (4,24) der Förderkammer (22) angeschlossen ist.

7. Fördervorrichtung nach Anspruch 5 oder 6, **dadurch gekennzeichnet, daß** sie einen Gasdruckspeicher (9) aufweist, aus dem Gas, das unter einem Druck steht, der höher ist als der Porendruck des Materials (7) in der Förderkammer (2) in die geschlossene Förderkammer (2) einpreßbar ist.

8. Fördervorrichtung nach einem der Ansprüche 5 bis 7, **dadurch gekennzeichnet, daß** die Bewegung der Schieber (4,5;24,25) und/oder die Zudosierung von Gas aus dem Gasdruckspeicher (9) in der Förderkammer (2,22) elektronisch programmgesteuert ist/sind.

## Claims

1. Method for carrying out material (6,17) from a pressure chamber (1,12), preferably muck from the stripping chamber (12) of earth-pressure-balanced shields (EPB-shields), in which pressure chamber the material is stored mixed with a compressible gaseous medium and from where the pressurized material (6,17) mixed with said compressible gaseous medium is pressed out through an opened sliding valve (4,24) by the force of the pressure in the pressure chamber (1,12), which pressure is larger than a smaller, normally atmospheric, pressure prevailing in a space at the outside of the pressure chamber, the so-called back space, **characterized in that** the material is pressed through said opened inlet sliding valve (4,24) into a conveyor chamber (2,22), which is limited by said inlet sliding valve (4,24) and by a closed outlet sliding valve (5,25) against said back space (3,23) which is subjected to said smaller pressure, and that the ejection of the material out of the conveyor chamber (2,22) after closing of the inlet sliding valve (4,24) is brought about by an abrupt opening of the outlet sliding valve (5,25) caused by the sudden expansion of said compressed gaseous medium.

2. Method according to claim 1, **characterized in that** said material (6,17) with said compressible gaseous medium is fed via a conveyor device, such as a screw conveyor (18), to said conveyor chamber (22), which conveyor device (18) acts at the same time as a pressure lock and is connected with its inlet side to said pressure chamber (12) and with its outlet side to said inlet sliding valve (4,24) of the conveyor chamber (22).

3. Method according to claims 1 or 2, **characterized in that** the ejection energy in the conveyor chamber (2,22) is increased by additional gas introduced into the closed conveyor chamber filled with material (7), which additional gas has a pressure larger than the pressure in the pores of the material (7) in the conveyor chamber (2,22).

4. Method according to any of claims 1 to 3, **characterized in that** the material (6,17) is conditioned by the addition of substances, such as foaming agents, in such a way that the expansion of the compressible gaseous medium is retarded against the opening time of the outlet sliding valve (5,25).

5. Conveyor device for carrying out material (6,17) from a pressure chamber (1,12), preferably muck from a stripping chamber (12) of earth-pressure-balanced shields (EPB-shields), with which the material is adapted to be pressed out through an opened sliding valve (4,24) by a pressure prevailing in the pressure chamber (1,12), which pressure is larger than a smaller, normally atmospheric, pressure prevailing in a space (3,23) at the outside of the pressure chamber, the so-called back space, for carrying out the method according to any of claims 1 to 4, **characterized in that** the discharge passage between the pressure chamber (1,12) said back space (3,23) is arranged by an empty pipe-like conveyor chamber (2,22) with smooth walls, which conveyor chamber is limited by an inlet sliding valve (4,24) towards the pressure chamber (1,22) and by a quickly openable outlet sliding valve (5,25) towards said back space (3,23), and that the sliding valves (4,5;24,25) are controllable in such a way that one sliding valve is openable only when the other one is closed.

6. Conveyor device according to claim 5, **characterized in that** said material (6,17) with said compressible gaseous medium is fed via a conveyor, such as a screw conveyor (18), to said conveyor chamber (22), which conveyor (18) is connected with its input side to said pressure chamber (12) and with its output side to the inlet sliding valve (4,24) of the conveyor chamber (22).

7. Conveyor device according to claim 5 or 6, **characterized in that** it comprises an accumulator (9) for pressurized gas from which gas, having a higher pressure than the pressure of the gas in the pores of the material (7), is adapted to be pressed into the conveyor chamber (2).

8. Conveyor device according to any of claims 5 to 7, **characterized in that** the movement of the sliding valves (4,5;24,25) and/or the addition of gas from the accumulator (9) for pressurized gas into the conveyor chamber (2,22) are/is electronically program-controlled.

## Revendications

1. Procédé d'évacuation d'un matériau (6, 17) d'une chambre (1, 12) de pression, principalement de déblais de la chambre (12) d'abattage de boucliers à pression active du sol, chambre dans laquelle le matériau est stocké en étant mélangé à un fluide gazeux compressible, et de laquelle le matériau (6, 17) sous pression, intimement mélangé au fluide gazeux compressible, est expulsé à travers l'ouverture ouverte d'un tiroir (4, 24) par la force de la pression dans la chambre (1, 12) de pression, pression qui est supérieure à une pression inférieure, de préférence atmosphérique, qui règne dans une chambre située en dehors de la chambre de pression et appelée « chambre arrière », **caractérisé en ce que** le matériau est refoulé à travers le tiroir (4,24) d'entrée ouvert dans une chambre (2, 22) d'extraction qui est délimitée par le tiroir (4,24) d'entrée et par un tiroir (5, 25) de sortie fermé vis-à-vis de la chambre (3, 23) arrière se trouvant à une pression inférieure, et **en ce que** l'éjection du matériau de la chambre (2, 22) d'extraction s'effectue, après fermeture du tiroir (4,24) d'entrée, par la brusque ouverture du tiroir (5, 25) de sortie en raison de la brusque détente du fluide gazeux comprimé.

2. Procédé suivant la revendication 1, **caractérisé en ce que** ledit matériau (6, 17) est évacué avec ledit fluide gazeux compressible par l'intermédiaire d'un moyen de transport, comme une vis convoyeuse (18), qui sert en même temps de sas de décompression et qui est raccordé par son côté d'entrée à ladite chambre (12) de pression et par son côté de sortie audit tiroir (4,24) d'entrée de la chambre (22) d'extraction.

3. Procédé suivant la revendication 1 ou 2, **caractérisé en ce que** l'énergie d'évacuation dans la chambre (2, 22) d'extraction est accrue par du gaz introduit en supplément dans la chambre d'extraction fermée, alimentée en matériau (7), gaz qui se trouve à une pression qui est supérieure à la pression interstitielle du matériau (7) dans la chambre (2, 22) d'extraction.

4. Procédé suivant l'une des revendications 1 à 3, **caractérisé en ce que** le matériau (6, 17) est, par l'addition d'agents comme par exemple des agents moussants, traité de telle sorte que le fluide gazeux compressible se détend de façon retardée par rapport à l'instant d'ouverture du tiroir (5, 25) de sortie.

5. Dispositif d'extraction pour évacuer un matériau (6, 17) d'une chambre (1, 12) de pression, principalement pour évacuer des déblais de la chambre (12) d'abattage de boucliers à pression active du sol, avec lequel le matériau peut être expulsé à travers une ouverture ouverte de tiroir (4, 24) par une pression, régnant dans la chambre (1, 12) de pression, qui est supérieure à une pression inférieure, de préférence atmosphérique, qui règne dans une chambre (3, 23) située en dehors de la chambre de pression et appelée « chambre arrière », pour la mise en oeuvre du procédé suivant l'une des revendications 1 à 4, **caractérisé en ce qu'**une chambre (2, 22) d'extraction tubulaire vide, à paroi lisse, est prévue dans le chemin d'évacuation entre la chambre (1, 12) de pression et ladite chambre (3, 23) arrière, et est délimitée par un tiroir (4,24) d'entrée vis-à-vis de la chambre (1, 12) de pression et par un tiroir (5, 25) de sortie à ouverture rapide vis-à-vis de la chambre (3, 23) arrière, et **en ce que** les tiroirs (4, 5 / 24, 25) peuvent être commandés de telle sorte que l'un des tiroirs ne peut être ouvert que si l'autre est fermé.

6. Dispositif suivant la revendication 5, **caractérisé en ce que** ledit matériau (6, 17) est évacué avec ledit fluide gazeux compressible par l'intermédiaire d'un moyen de transport, comme une vis convoyeuse (18), qui est raccordé par son côté d'entrée à ladite chambre (12) de pression et par son côté de sortie au tiroir (4,24) d'entrée de la chambre (22) d'extraction.

7. Dispositif suivant la revendication 5 ou 6, **caractérisé en ce qu'**il comporte un réservoir (9) de gaz comprimé à partir duquel du gaz, qui se trouve à une pression qui est supérieure à la pression interstitielle du matériau (7) dans la chambre (2) d'extraction, peut être injecté dans la chambre (2) d'extraction fermée.

8. Dispositif suivant l'une des revendications 5 à 7, **caractérisé en ce que** le déplacement des tiroirs (4, 5 ; 24, 25), et/ou l'apport dosé de gaz à partir du réservoir (9) de gaz comprimé dans la chambre (2, 22) d'extraction, est/sont commandé(s) électroniquement par programme.
